## Europäisches Patentamt
## European Patent Office
## Office européen des brevets

(19)

(11) Veröffentlichungsnummer: **0 013 010**
**B1**

(12) # EUROPÄISCHE PATENTSCHRIFT

(45) Veröffentlichungstag der Patentschrift:
23.06.82

(51) Int. Cl.³: **A 47 J 31/44,** A 47 G 23/02

(21) Anmeldenummer: **79105304.4**

(22) Anmeldetag: **21.12.79**

(54) **Vorrichtung zur Erwärmung von Mixgetränk-Flüssigkeiten.**

(30) Priorität: **27.12.78 DE 2856346**

(43) Veröffentlichungstag der Anmeldung:
**09.07.80 Patentblatt 80/14**

(45) Bekanntmachung des Hinweises auf die Patenterteilung:
**23.06.82 Patentblatt 82/25**

(84) Benannte Vertragsstaaten:
**AT CH FR GB IT NL**

(56) Entgegenhaltungen:
**CH-A-404 895**
**DE-A-2 140 684**
**DE-A-2 159 671**
**US-A-3 782 361**

(73) Patentinhaber: **Hans Karl Kleindienst Metallwarenfabrik,
Veit-Stoss-Strasse 3, D-8602 Debring (DE)**

(72) Erfinder: **Rösch, Herrmann, Petersstrasse 15,
D-8500 Nürnberg (DE)**

(74) Vertreter: **Buchau, Erhard, Dipl.-Ing., Hutgraben 25,
D-8520 Erlangen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

## Vorrichtung zur Erwärmung von Mixgetränk-Flüssigkeiten

Die Erfindung bezieht sich auf eine Vorrichtung zur Erwärmung von Mixgetränk-Flüssigkeiten nach dem Oberbegriff des Anspruchs 1.

Eine solche Vorrichtung ist durch das DE-U-7 131 138 bekannt. Dabei sind an einem rechtekkigen Blech in Flucht zueinander angeordnete, äußere Zahnkränze aufweisende Mitnehmer-Teller für die Glasfüße drehbar gelagert, wobei die Zahnkränze miteinander und mit einem Antriebsritzel kämmen. Das Blech weist außerdem eine Mehrzahl von aus der Blechebene abgebogenen Blechzungen als Stiel- und Kelchlager für die Trinkgläser auf, welch letztere beim Heizvorgang in Schräglage des Blechs entsprechend schräg nach oben geneigt in die Brennerzone ragend drehbar sind bzw. mit dem Blech um eine horizontale Blechlängsachse mit dem Glasstiel als Tangente des Schwenkvorganges aus dem Flammenbereich in eine vertikale Ruheposition und umgekehrt schwenkbar sind. Die bekannte Vorrichtung vermittelt mit gestanzten Blechzungen und den Zahnkränzen einen relativ nüchternen, maschinenbaulichen Eindruck, so daß sie z. B. für Hausbars weniger geeignet ist. Das Hin- und Herschwenken des Blechs jeweils mit dem Glasstiel als Tangente des Schwenkbogens muß außerdem sehr vorsichtig geschehen, da andernfalls Whisky verschüttet werden könnte, der bereits entflammt ist bzw. beim Verschütten mit der Brennerflamme in Berührung kommt und sich dann entzündet.

Bei einer zweiten Ausführungsform des genannten deutschen Gebrauchsmusters (Fig. 4) entfällt zwar das Verschwenken, da die um ihre Längsachse drehbar gelagerten Trinkgläser in vertikaler Heizposition um einen zentralen Sternbrenner herum gruppiert sind, z. B. in hexagonaler Anordnung um einen sechs zugeordnete Brennerdüsen aufweisenden Sternbrenner. Bei einer vertikalen Heizposition ist jedoch die Benetzungsfläche der Trinkgläser und damit die den Flammen ausgesetzte Wärmeübergangsfläche kleiner als bei in Schräglage aufgeheizten Trinkgläsern; ferner müssen die Brennerflammen vor Entnahme der aufgeheizten Trinkgläser mit Inhalt gelöscht werden, da die Trinkgläser nicht aus dem Flammenangriffsbereich in eine Ruheposition verlagert werden können.

Der Erfindung liegt die Aufgabe zugrunde, eine Vorrichtung zur Erwärmung von Mixgetränk-Flüssigkeiten der eingangs definierten Art zu schaffen, bei welcher die geschilderten Nachteile vermieden sind und welche optisch ansprechender gestaltet werden kann, wobei zugleich eine gute Raumausnutzung der Vorrichtung bei relativ kleiner Grundfläche gewährleistet sein soll.

Erfindungsgemäß wird die gestellte Aufgabe durch die im Kennzeichen des Anspruchs 1 angegebenen Merkmale gelöst. Die mit der Erfindung erzielbaren Vorteile sind vor allem darin zu sehen, daß das Verschwenken der Trinkgläser aus der Flammenangriffsposition in eine Ruheposition außerhalb der Flammenzone nicht in einer Vertikalebene, sondern in einer Horizontalebene erfolgt, so daß die Möglichkeit des unbeabsichtigten Verschüttens von Whisky oder dergleichen beim Verschwenker wesentlich geringer ist. Durch den karussellartigen Aufbau der Vorrichtung ist diese besonders für eine Tischrunde geeignet, wobei jeder das ihm zugeordnete Trinkglas drehen kann, d. h., es kann nun auch beim Trinken von Irish Coffee oder dergleichen ähnlich dem Fondue-Essen jeder sich selbst bedienen. Die neue Vorrichtung ist weiterhin optisch ansprechend, insbesondere wenn sie aus Schmiedeeisen kunstgeschmiedet ist, und eignet sich deshalb auch dann, wenn sie nicht benutzt wird, als Dekoration von Bartischen.

Besonders günstig ist die Ausführungsform gemäß Anspruch 2. Es kann dabei ein Trinkgefäßpaar vorgewärmt und ein zweites Trinkgefäßpaar in Warteposition gehalten werden. Ist die Flüssigkeit des ersten Paares vorgewärmt, so kann durch ein einfaches Verschwenken um 90° das zweite Paar in Flammenangriffsposition gebracht werden, während das erste Paar entnommen und aufgefüllt wird. Diese Ausführungsform ist besonders gut für die eingangs erwähnten Irish-Coffee-Sets geeignet. Grundsätzlich ließen sich aber auch andere Mixgetränke, z. B. unter Verwendung von Weinbrand, damit herstellen. Es kann zweckmäßig sein, die Anzahl der Rechaud-Halterungen und Trinkgefäß-Lager pro Vorrichtung noch weiter zu vergrößern, z. B. können sechs Trinkgefäß-Lager in hexagonaler Anordnung vorgesehen sein, wobei entweder jedem zweiten oder jedem dritten Lager ein Rechaud bzw. eine Rechaud-Halterung zugeordnet ist. Bei zwei Rechauds kann die Vorrichtung noch von einer Person bedient werden, falls die Trinkgefäße, insbesondere Trinkgläser, beim Vorwärmvorgang gedreht werden müssen, so wie es beim Irish-Coffee-Set üblich ist. Sind mehr als zwei Rechauds pro Vorrichtung in Flammeneingriff, so muß für das dritte aufzuwärmende Glas eine zweite Person das langsame Drehen übernehmen.

Im folgenden wird an Hand eines in der Zeichnung dargestellten Ausführungsbeispiels die Vorrichtung nach der Erfindung noch näher erläutert und ihre Wirkungsweise beschrieben. Es zeigt

Fig. 1 in perspektivischer Darstellung eine Vorrichtung nach der Erfindung, vorzugsweise als Irish-Coffee-Set geeignet,

Fig. 2 die Einzelheit der drehbaren Lagerung des bezüglich des Ständers bewegbaren Haltegliedes der Trinkgefäß-Lager und die Verbindung Ständer–Ständerfuß im Aufriß, zum Teil im Schnitt.

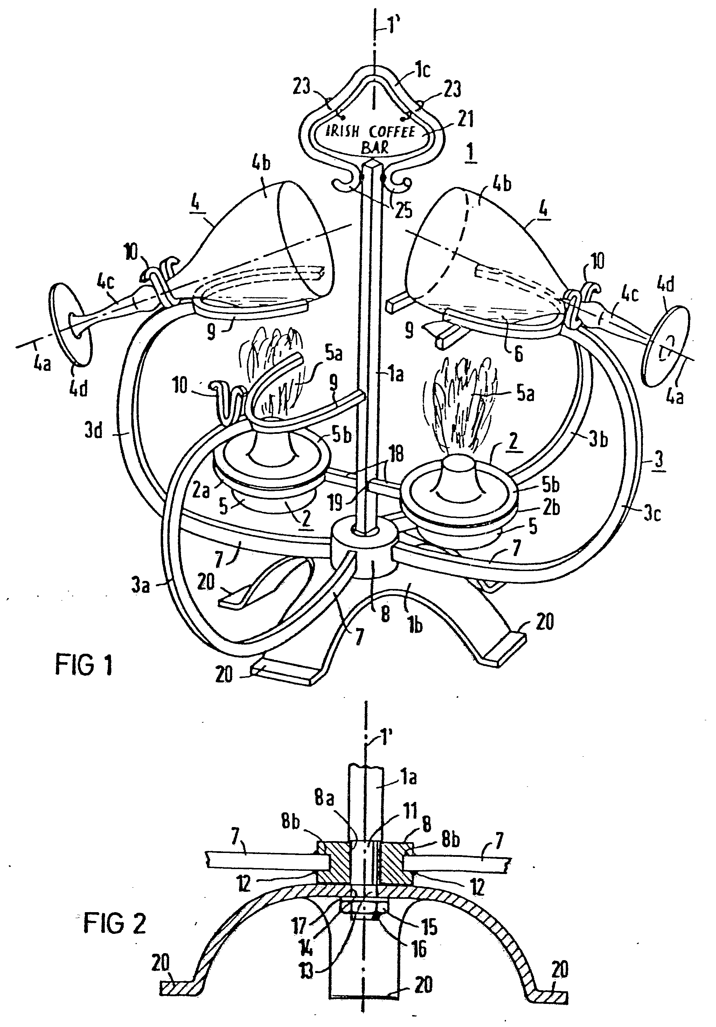

Die Vorrichtung nach Fig. 1 und 2 besteht zunächst aus einem Ständer 1 mit Schaft 1a, Fuß 1b und Kopf 1c. Ferner weist der Ständer eine Rechaud-Halterung 2 und ein Trinkgefäß-Lager 3 auf. Die genannten Teile bestehen aus Schmiedeeisen und sind kunstgeschmiedet. Die Trinkgefäße, im vorliegenden Fall Trinkgläser 4 aus feuerfestem Glas, sind bauchig ausgeführt und in Schräglage um ihre Längsachse 4a drehbar in ihren Lagern 3 mit vertikalem Abstand zur Spiritusflamme der Rechauds 5 gehalten. Die Bauchigkeit der Trinkgläser ermöglicht, daß die beim rechten Trinkglas angeordnete Flüssigkeit 6, bei der Zubereitung von Irish-Coffee ist es entflammbarer Whisky, bei Schräglage sich großflächig im Trinkglas verteilt und so eine große Flammenangriffsfläche geboten wird, welche eine schnelle Aufheizung gewährleistet, wenn die Trinkgläser 4 zwecks Vermeidung des Glasspringens um ihre Längsachse 4a langsam gedreht werden, so daß das Trinkglas gleichmäßig erwärmt wird.

Nach der Erfindung ist nun der Ständer 1 mit Lagern 3 zur Aufnahme von mindestens zwei Trinkgläsern 4 und mit mindestens zwei zugehörigen Rechaud-Halterungen 2a, 2b versehen. Die Trinkglas-Lager 3 und mit ihnen die Trinkgläser 4 einerseits und die Halterungen 2, 2a, 2b für die Rechauds 5 andererseits sind relativ zueinander bewegbar derart angeordnet, daß nach durchgeführtem Erwärmvorgang die Trinkgläser 4 aus dem Flammenangriffsbereich 5a der Rechauds 5 bringbar sind. Nach Fig. 1 sind vier um die Ständerlängsachse 1' drehbar angeordnete Trinkglas-Lager 3 vorgesehen, welche relativ zu den mit dem Ständerschaft 1a verbundenen Rechaud-Halterungen 2a, 2b verdrehbar sind. Für den Hausgebrauch besonders günstig ist die dargestellte Ausführung, bei der zwei in bezug auf eine vertikale Ständerlängsachse 1' einander diametral gegenüberliegende Rechaud-Halterungen 2a, 2b vier im Grundriß kreuzförmig angeordnete Trinkglas-Lager 3 zugeordnet sind, wovon jeweils zwei in bzw. außer Eingriff bezüglich des Rechaud-Flammenangriffsbereiches 5a bringbar sind. Nach Fig. 1 sind gerade die Trinkglas-Lager 3c, 3d mit den Trinkgläsern 4 im Flammenangriffsbereich 5a, wogegen die Trinkglas-Lager 3a, 3b eine Warteposition einnehmen. In dieser können zwei neue Trinkgläser mit entsprechender Menge vorzuwärmenden Whiskys, Weinbrands oder dergleichen in die Trinkglas-Lager 3a, 3b eingefügt werden. Wenn dann die Trinkglas-Lager 3a, 3c nach beendetem Aufwärmvorgang der Trinkgläser 4 aus dem Flammenangriffsbereich 5a herausgeschwenkt werden, dann kommen zugleich die (nicht dargestellten) Trinkgläser in den Trinkglas-Lagern 3a, 3b mit ihrem Inhalt in die Heizposition.

Die Trinkglas-Lager 3 bzw. 3a bis 3d sind von bogenförmig gekrümmten Armen gebildet, die mit ihrem fußseitigen Ende 7 an einem zum Ständer 1 bewegbaren Halteglied 8 befestigt sind (siehe auch Fig. 2), an ihrem freien Ende mit einer etwa gabelförmigen, geneigt zur Horizontalen verlaufenden Aufnahme 9 für den Trinkglas-Kelch 4b versehen und in ihrem an die Aufnahme 9 angrenzenden Bereich mit einer etwa V-förmigen Aufnahme 10 für den an dieser Stelle runden Trinkglas-Stiel versehen sind. Der Trinkglas-Stiel ist mit 4c, der -Fuß mit 4d bezeichnet. Die Trinkgläser 4 können mithin innerhalb ihrer Aufnahmen 9, 10 um ihre Längsachse 4a durch Anfassen und Drehen des Fußes 4d langsam gedreht werden. Das Halteglied 8 (siehe auch Fig. 2) ist als Drehscheibe mit einer zentralen Bohrung 8a versehen, die zwecks drehbarer Lagerung von einem verjüngten Schaftteil 11 durchdrungen ist. In radial zur Haltegliedachse orientierten Bohrungen 8b sind die fußseitigen Enden 7 der Trinkglas-Lager 3 eingefügt und mittels Schweißstellen 12 befestigt. Angrenzend an den verjüngten Schaftteil 11 ist ein im Durchmesser noch weiter verkleinerter Halsteil 13 am Schaft 1a angeordnet, auf den der Ständerfuß 1b mit einer mittigen Bohrung bzw. Öffnung 14 aufgeschoben ist. Der Ständerfuß 1b ist dann mittels einer auf ein entsprechendes Gewinde des Halsteils 13 aufgeschraubten Mutter 15 gegen eine zwischen Schaftteil 11 und Halsteil 13 gebildete Schulter fest verspannt. Die Mutter 15 ist durch einen Schweißpunkt 16 verdrehgesichert. Zwischen Mutter 15 und Ständerfuß 1b ist zweckmäßig eine Beilagscheibe 17 eingelegt.

Die Rechaud-Halterungen 2a, 2b (Fig. 1) bestehen aus an ihren freien Enden etwa kreisförmig gebogenen Armen, wodurch Aufnahmeaugen für die Rechaud-Behälter 5 gebildet sind. Letztere stützen sich mit einem Rand 5b größeren Durchmessers an der Halterung 2a, 2b ab. Mit ihren inneren Enden 18 sind die Arme der Halterungen 2a, 2b am Ständerschaft 1a bei 19 festgeschweißt. Der vierbeinige Ständerfuß 1b weist plane Fuß-Standflächen 20 auf. Der Ständerkopf 1c ist als etwa herzförmig gebogene Umrahmung zum Einhängen von ovalen Schildern 21, z. B. mit der Aufschrift »Irish Coffee Bar« ausgebildet, wobei zwei S-förmig gebogene Haken 23 am Ständerkopf 1c befestigt sind, an denen das Schild 21 mit Ausnehmungen eingehängt ist. Der Ständerkopf 1c ist am Ständerschaft 1a mit seinen beiden Enden 25 festgeschweißt.

**Patentansprüche**

1. Vorrichtung zur Erwärmung von Mixgetränk-Flüssigkeiten, bestehend aus einem Ständer (1) mit Halterungen (2) für mehrere Rechauds (5) und mit zugehörigen Lagern (3) zur Lagerung und gleichzeitigen Erwärmung von mehreren, die aufzuwärmende Flüssigkeit enthaltenden feuerfesten Trinkgefäßen (4), wobei die Trinkgefäße (4) bauchig ausgeführt und in einer Heizposition in Schräglage mit Abstand zur Spiritusflamme der Rechauds (5) um ihre Längsachse (4a) drehbar positionierbar sind und wobei die Trinkgefäß-Lager (3) und die Halterungen (2) für die Rechauds (5) relativ zueinander bewegbar derart angeordnet sind, daß die Trinkgefäße (4) zum Erwärmen in den bzw. nach durchgeführtem Erwärmvorgang aus dem Flammenangriffsbereich (5a) der Rechauds (5) bringbar sind, dadurch gekennzeichnet, daß um die Längsachse (1') eines vertikalen Ständers (1) mit Schaft (1a) und Fuß (1b) herum mindestens zwei an einem als Drehscheibe am Ständer (1) gelagerten Halteglied (8) befestigte Trinkgefäß-Lager (3a, 3b bzw. 3c, 3d) karussellartig drehbar angeordnet sind, welche relativ zu mindestens zwei, in bezug auf die Längsachse (1') des Ständers (1) einander diametral gegenüberliegenden, mit dem Ständer (1) verbundenen Rechaud-Halterungen (2a, 2b) in bzw. außer Flammenangriff verdrehbar sind.

2. Vorrichtung nach Anspruch 1, dadurch gekennzeichnet, daß mindestens vier im Grundriß kreuzförmig angeordnete Trinkgefäß-Lager (3a, 3b, 3c, 3d) vorgesehen sind, wovon jeweils mindestens zwei (3a, 3b bzw. 3c, 3d) in bzw. außer Eingriff bezüglich des Rechaud-Flammenangriffsbereiches (5a) bringbar sind.

3. Vorrichtung nach Anspruch 1 oder 2, dadurch gekennzeichnet, daß die Trinkgefäß-Lager von bogenförmig gekrümmten Armen (3a, 3b, 3c, 3d) gebildet sind, die mit ihrem fußseitigen Ende an dem drehbaren Halteglied (8) befestigt, an ihrem freien Ende mit einer etwa gabelförmigen, geneigt zur Horizontalen verlaufenden Aufnahme (9) für den Trinkglaskelch (4b) und in ihrem an die Aufnahme (9) angrenzenden Bereich mit einer etwa V-förmigen Aufnahme (10) für den an dieser Stelle runden Trinkglasstiel (4c) versehen sind.

4. Vorrichtung nach einem der Ansprüche 1 bis 3, dadurch gekennzeichnet, daß die Rechaud-Halterungen (2) aus an ihren freien Enden etwa kreisförmig gebogenen Armen (2a, 2b) bestehen, welche Aufnahmeaugen für die Rechaudbehälter (5) bilden und mit einem inneren Ende (18) jeweils am Ständer (1) befestigt sind.

## Claims

1. Device for heating mixed drink liquids, comprising a stand (1) provided with first supports (2) for rechauds (5), said stand further being provided with second supports (3) for supporting and simultaneously heating several goblets (4), said goblets being fire resistant and of convex shape and being positionable at an angle of an inclined heating position spaced with respect to the spiritus flames (5a) of the rechauds (5) and rotatable about their longitudinal axis (4a), said first and said second supports (2, 3) being arranged in such movable relationship that the goblets (4), for being heated, can be moved into, and, after heating, can be removed off the heating flame zones (5a) of the rechauds (5), wherein the improvement comprises:

— a vertically positioned stand (1) having a shaft (1a), a base (1b), and a longitudinal axis (1');
— the second support (3) comprising at least two goblet supports (3a, 3b; 3c, 3d) being connected to a bearing disc (8) rotatable about the stand (1) so that the goblet supports may be turned merry-goround-like about the longitudinal axis (1') of the stand (1); and
— at least two ones of the first supports (2) being disposed diametrically opposite the longitudinal axis (1') of the stand (1) and connected to the latter with regard to which the goblet supports (3a, 3b, 3c, 3d) can be turned into an out of the heating flame zones (5a).

2. The device according to claim 1 wherein there are provided at least four — in a plan view — cross-like arranged goblet supports (3a, 3b, 3c, 3d), at least two of which (3a, 3b or 3c, 3d), respectively, are positionable in an out of the heating flame zones (5a).

3. The device according to claim 1 or 2 wherein the goblet supports are formed by arched arms (3a, 3b, 3c, 3d), the arms being fastened with their foot-side ends to the bearing disc (8) and being provided at their free ends with a substantially forked first receptacle (9) designed to receive the goblet bowls (4b) and with a substantially V-shaped second receptacle (10) adjacent the first receptacle (9) for receiving the goblet stem (4c), said goblet stem having a portion of round cross section within the area of the second receptacle (10).

4. The de ice according to one of the claims 1—3 wherein the first supports (2) for the rechauds (5) are comprising brackets (2a, 2b) being bent at their free ends to form substantially circular eyelets for the rechaud cans (5) and being fastened at their inner ends (18) to the stand (1).

## Revendications

1. Dispositiv d' échauffage des liquides pour des boissons mélangés, constitué par un support (1) pourvue de portes-réchauds (2) et pourvue de portes-verres (3) correspondants pour porter et échauffer en même temps quelques verres à pied (4), ces verres à pied (4) étant résistants au feu et de forme convexe et pouvant être disposés sur un angle d' une position d' échauffage inclinée distante des flammes de réchaud (5) à esprit de vin et tournant autour de leurs axes longitudinals (4a), ces portes-réchauds et portes-verres (2, 3) étant arrangés selon une telle relation mobile que les verres à pied — pour échauffage — peuvent être mis dedans les zones (5a) des flammes de réchaud (5) et — après l' échauffage — peuvent être remis dehors lesdits zones, caractérisé en ce qu' il comprend:

— un support vertical (1) avec un poteau (1a), une base (1b) et un axe longitudinal (1');
— deux portes-verres (3a, 3b, 3c, 3d) au moins, fixés à une disque de palier (8) tournant autour du support (1) de telle façon que les portes-verres (3) peuvent être tournés autour de l'axe longitudinal (1') du support (1) comme un carrousel
— et deux portes-réchauds (2) au moins situés diametricalement opposés de l'axe longitudinal (1') du support (1) et fixés à ledit support, les portes-verres (3a, 3b, 3c, 3d) pouvant être tournés dedans les zones (5a) des flammes de portes-réchauds (2a, 2b) et dehors lesdits zones.

2. Dispositiv selon la revendication 1 caractérisé en ce qu'il comprend quatre portes-verres (3a, 3b, 3c, 3d) au moins arrangés par plan en ordre de croix, deux portes-verres au moins respectivement peuvent mûs dedans les zones (5a) des flammes de réchauds (5) et vice versa.

3. Dispositiv selon l'une quelconque des revendications 1 et 2, caractérisé en ce que les portes-verres (3, 3a, 3b, 3c, 3d) sont constitués par des bras courbés (3a, 3b, 3c, 3d), lesdits bras courbés étant fixés au disque de palier (8) avec leurs bouts adjacents la base (1b), lesdits bras courbés en outre étant munis respectivement d'un lit bifurqué (9) situé à leurs bouts libres et destiné de recevoir les gobelets (4b) des verres à pied (4) et finalement étant munis d'un palier en forme de »V« (10) adjacent le lit bifurqué de supporter le manche des verres à pied (4), ledit manche (4c) ayant une section transversale ronde dans sa partie supportée par le palier correspondant.

4. Dispositiv selon l'une quelconque des revendications 1 à 3, caractérisé en ce que le portes-réchauds (2) comprennent des bâtis (2a, 2b) courbés a leurs bouts libres substantiellement en façon de cercle et constituant des yeux de support pour les boîtes (5) de réchaud ainsi que étant fixés respectivement au support (1) à leurs bouts interieurs.

FIG 1

FIG 2